# EUROPÄISCHE PATENTSCHRIFT

(11) **EP 2 697 037 B1**
(45) Veröffentlichungstag und Bekanntmachung des Hinweises auf die Patenterteilung: **10.05.2017**
(21) Anmeldenummer: 12714561.3
(22) Anmeldetag: 12.03.2012
(51) Int. Cl.: B29C 70/08, B60N 2/68, B60N 2/70

(54) **VERSTÄRKTES STRUKTURELEMENT AUS KUNSTSTOFF INSBESONDERE IM FAHRZEUGINNENAUSSTATTUNGSBEREICH**
REINFORCED STRUCTURAL ELEMENT MADE OF PLASTIC, IN PARTICULAR IN THE VEHICLE INTERIOR DESIGN FIELD
ÉLÉMENT STRUCTURAL RENFORCÉ EN MATIÈRE PLASTIQUE, NOTAMMENT DANS LE DOMAINE DE L'AMÉNAGEMENT INTÉRIEUR DE VÉHICULES

(30) Priorität: 15.04.2011 DE 102011017281
(43) Veröffentlichungstag der Anmeldung: 19.02.2014
(73) Patentinhaber: Johnson Controls GmbH, 51399 Burscheid (DE)
(72) Erfinder: GROß , Bernd, 40764 Langenfeld (DE); WERNER, Hans-Georg, 40764 Langenfeld (DE); PARUCHURI, Sreenivas, 40221 Düsseldorf (DE)
(74) Vertreter: Wolff, Felix
(86) Internationale Anmeldenummer: PCT/EP2012/001096
(87) Internationale Veröffentlichungsnummer: WO 2012/139689

(56) Entgegenhaltungen:
- DE-A1-102009 006 130
- DE-U1-202009 006 966
- US-A- 6 056 366
- US-B1- 6 423 388
- "Tailgate uses E-LFT technology", REINFORCED PLASTICS, ELSEVIER ADVANCED TECHNOLOGY, NEW YORK, NY, US, Bd. 52, Nr. 4, 1. April 2008 (2008-04-01), Seite 4, XP022619482, ISSN: 0034-3617, DOI: 10.1016/S0034-3617(08)70072-9 [gefunden am 2008-04-01]
- JAN H. SCHUT: 'Long-Glass Leader-How Faurecia Helped Put TP Composites In the Driver's Seat : Plastics Technology', [Online] 15 August 2002, XP055172398 Gefunden im Internet: <URL:http://www.ptonline.com/articles/long- glass-leader-how-faurecia-helped-put-tp-com posites-in-the-driver%27s-seat> [gefunden am 2015-02-26]

## Beschreibung

Die vorliegende Erfindung betrifft ein Fahrzeugstrukturelement aus Kunststoff. Des Weiteren betrifft die vorliegende Erfindung ein Verfahren zur Herstellung eines Fahrzeugstrukturelementes aus Kunststoff.

Im Fahrzeugbau gibt es fortlaufend Bestrebungen, das Gewicht der Fahrzeuge zu reduzieren. Dabei sollen insbesondere Metallstrukturteile durch faserverstärkte Fahrzeugstrukturelemente aus Kunststoff ersetzt werden. Verfahren zur Herstellung von faserverstärkten Fahrzeugstrukturelementen aus Kunststoff bzw. derartige Kunststoffstrukturelemente sind beispielsweise aus der DE 195 48 854 C2, der EP 0 782 909 B1 sowie der EP 0 782 909 B1bekannt. Die dort beschriebenen faserverstärkten Fahrzeugstrukturelemente aus Kunststoff sind jedoch vergleichsweise aufwändig herzustellen. Ebenfalls sind aus der KR 2000-0050316 sowie aus der US 6 423 388 B1 faserverstärkte Fahrzeugstrukturelemente aus Kunststoff bekannt. Es war deshalb die Aufgabe der vorliegenden Erfindung, ein faserverstärktes Fahrzeugstrukturelement aus Kunststoff zur Verfügung zu stellen, mit dem ein metallisches Strukturelement ersetzt werden kann und das einfach und kostengünstig herzustellen ist.

Gelöst wird die Aufgabe mit einem Fahrzeugstrukturelement aus Kunststoff gemäß dem Anspruch 1 sowie mit einem Verfahren gemäß dem Anspruch 5.

Erfindungsgemäß ist das Fahrzeugstrukturelement aus Kunststoff verstärkt, wobei es mindestens einen Bereich, der kohlefaserverstärkt ist, und mindestens einen Bereich, der glasfaserverstärkt ist, aufweist. Die Kohlefasern sowie die Glasfasern können eine beliebige Länge bzw. eine beliebige Dicke aufweisen. Die Kohlefasern sowie die Glasfasern können gerichtet oder ungerichtet sein. Die Kohlefasern und/oder die Glasfasern können als Gewebe, Matte, Gelege, Gewirk bzw. Gestrick und/oder einer Kombination aus diesen Strukturen vorliegen. Dieses Halbzeug ist vorzugsweise, beispielsweise durch thermische Verformung, in eine dreidimensionale Struktur (3D-Struktur) geformt. Vorzugsweise ist der kohlefaserverstärkte Bereich in einem Bereich des Fahrzeugstrukturelementes angeordnet, der mechanisch höher belastet ist als der Bereich des Fahrzeugstrukturelements aus Kunststoff, in dem die Glasfasern angeordnet werden. Der kohlefaserverstärkte Bereich und der glasfaserverstärkte Bereich stoßen unmittelbar aneinander an oder sind sogar zumindest teilweise überlappend vorgesehen. Vorzugsweise werden lediglich die hochbelasteten Bereiche mit Kohlefasern verstärkt. Der gesamte andere Bereich des erfindungsgemäßen Fahrzeugstrukturelements aus Kunststoff wird vorzugsweise mit Glasfasern verstärkt, so dass das Fahrzeugstrukturelement aus Kunststoff vorzugsweise insgesamt verstärkt vorgesehen ist.

Es ist jedoch auch möglich, Segmente des Fahrzeugstrukturelementes vorzusehen, die glasfaserverstärkt und kohlefaserverstärkt sind.

Die Materialien werden unter Berücksichtigung der gewünschten Festigkeit anforderungsgerecht in dem entsprechenden Strukturelement platziert. Durch diese Segmentierung wird es möglich, das Bauteilgewicht deutlich zu reduzieren, ohne Einbußen bezüglich der mechanischen Stabilität hinnehmen zu müssen. Des Weiteren wird es durch die Aufteilung in unterschiedliche Bereiche möglich, ein kostenoptimiertes Bauteil zur Verfügung zu stellen, welches deutlich günstiger ist als ein beispielsweise vollständig aus kohlefaserverstärktem Kunststoff gefertigtes Bauteil.

Vorzugsweise weist das erfindungsgemäße Fahrzeugstrukturelement aus Kunststoff eine dreidimensionale Struktur auf. Weiterhin bevorzugt weist das Fahrzeugstrukturelement aus Kunststoff ein Profil und/oder eine Ein- oder eine Auswölbung auf, insbesondere um dessen Stabilität weiter zu erhöhen. In dem erfindungsgemäßen Fahrzeugstrukturelement aus Kunststoff kann ein Mittel, beispielsweise eine Ausnehmung, zur Befestigung von einem Bauteil an dem Fahrzeugstrukturelement vorgesehen sein.

Das erfindungsgemäße Fahrzeugstrukturelement aus Kunststoff lässt sich beispielsweise mit dem sogenannten D-L-F-T(direct long reinforced thermoplastic)-Pressverfahren herstellen. Bei diesem Verfahren wird ein, vorzugsweise erwärmtes, bestimmtes Volumen aus verschiedenen Komponenten, beispielsweise mit einem Roboter, in ein Werkzeug eingelegt. Dabei wird die gewünschte Verstärkung in den jeweiligen Bereich berücksichtigt. Danach wird die Masse, beispielsweise mit einer Presse, in die gewünschte Form gebracht. Als Kunststoff, der durch die Kohlefasern und/oder die Glasfasern verstärkt wird, eignet sich insbesondere Polypropylen (PP) oder PP-Copolymer.

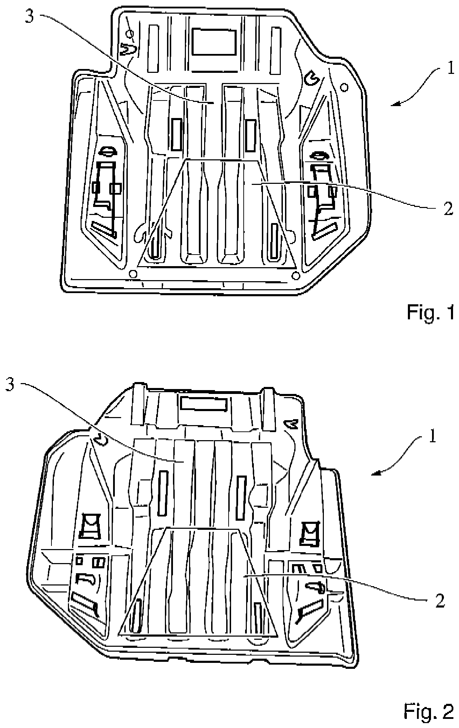

Im Folgenden wird die Erfindung anhand der Figuren 1 und 2 erläutert. Diese Erläuterungen schränken den allgemeinen Erfindungsgedanken nicht ein. Die Erläuterungen gelten für alle Gegenstände der vorliegenden Erfindung gleichermaßen.
- Figur 1: zeigt die Vorderseite eines erfindungsgemäßen Fahrzeugstrukturelementes aus Kunststoff.
- Figur 2: zeigt die Rückseite eines erfindungsgemäßen Fahrzeugstrukturelementes aus Kunststoff.

Figur 1 zeigt die Vorderseite eines erfindungsgemäß verstärkten Fahrzeugstrukturelementes aus Kunststoff, hier einer Sitzkissenschale. Auf dieser Vorderseite der Schale wird das Sitzkissen angeordnet, auf dem der Insasse sitzt. Bei der Sitzschale handelt es sich um ein erfindungsgemäß verstärktes Fahrzeugstrukturelement aus Kunststoff, das zwei Bereiche 2, 3 aufweist, die jeweils mit einem unterschiedlichen Material verstärkt sind. Bei dem Bereich 2 handelt es sich um einen kohlefaserverstärkten Bereich, während der Bereich 3 mit Glasfasern verstärkt ist. Der Bereich 2, hier die Schenkelauflage der Sitzkissenschale, muss besonders verstärkt sein, weil, beispielsweise bei einem Unfall, dort erhöhte Lasten auftreten und dieser Bereich besonders steif ausgeführt sein muss, um beispielsweise "Submarining" zu verhindern.

Figur 2 zeigt die Rückseite des Strukturelementes gemäß Figur 1. Wiederum sind die beiden unterschiedlich verstärkten Bereiche 2, 3 zu sehen, so dass auf die Ausführungen gemäß Figur 1 Bezug genommen werden kann.

### Bezugszeichenliste

- 1: Fahrzeugstrukturelement aus Kunststoff
- 2: kohlefaserverstärkter Bereich
- 3: glasfaserverstärkter Bereich

## Patentansprüche

1. Fahrzeugstrukturelement (1) aus Kunststoff, wobei es mindestens einen kohlefaserverstärkten Bereich (2) und mindestens einen glasfaserverstärkten Bereich (3) aufweist, **dadurch gekennzeichnet, dass** der kohlefaserverstärkte Bereich (2) und der glasfaserverstärkte Bereich (3) unmittelbar aneinander anstoßen, wobei das Fahrzeugstrukturelement (1) eine Kissenschale eines Sitzteils ist, wobei sich zumindest der kohlefaserverstärkte Bereich (2) auf einen Bereich einer Schenkelauflage der Kissenschale des Sitzteils erstreckt.

2. Fahrzeugstrukturelement (1) nach Anspruch 1, **dadurch gekennzeichnet, dass** die Kohlefasern des kohlefaserverstärkten Bereichs (2) sowie die Glasfasern des glasfaserverstärkten Bereichs (3) gerichtet oder ungerichtet sind, wobei die Bereiche (2, 3) vorzugsweise zumindest teilweise als Halbzeuge vorgesehen sind, die insbesondere in eine dreidimensionale Form, geformt sind.

3. Fahrzeugstrukturelement (1) nach Anspruch 1 oder 2, **dadurch gekennzeichnet, dass** die Kohlefasern und/oder die Glasfasern als Gewebe, Matten, Gelege, Gewirke bzw. Gestricke und/oder einer Kombination aus diesen Strukturen vorliegen.

4. Fahrzeugstrukturelement (1) nach einem der voranstehenden Ansprüche, **dadurch gekennzeichnet, dass** der kohlefaserverstärkte Bereich (2) in einem Bereich des Fahrzeugstrukturelementes angeordnet ist, der mechanisch höher belastet ist als der Bereich des Fahrzeugstrukturelements , der glasfaserverstärkt ist.

5. Verfahren zur Herstellung eines Fahrzeugstrukturelements (1) aus Kunststoff basierend auf einem Direct-Long Fiber Thermoplastic (D-LFT) Pressverfahren, **dadurch gekennzeichnet, dass** der vorgewärmte kohlefaserverstärkte Bereich (2) und der vorgewärmte glasfaserverstärkte Bereich (3) in eine Presse eingelegt, geformt und danach das fertiggestellte Fahrzeugstrukturelement (1) entnommen wird, dadurch gekennzeicht, dass das Fahrzeugstrukturelement (1) eine Kissenschale eines Sitzteils ist, wobei sich zumindest der kohlefaserverstärkte Bereich (2) auf einen Bereich einer Schenkelauflage der Kissenschale des Sitzteils erstreckt, wobei der kohlefaserverstärkte Bereich (2) und der glasfaserverstärkte Bereich (3) unmittelbar aneinander anstoßen.

## Claims

1. Vehicle structural element (1) made of plastic, wherein it has at least one carbon-fiber-reinforced region (2) and at least one glass-fiber-reinforced region (3), **characterized in that** the carbon-fiber-reinforced region (2) and the glass-fiber-reinforced region (3) adjoin one another directly, wherein the vehicle structural element (1) is a cushion shell of a seat part, wherein at least the carbon-fiber-reinforced region (2) extends onto a region of a thigh rest of the cushion shell of the seat part.

2. Vehicle structural element (1) according to Claim 1, **characterized in that** the carbon fibers of the carbon-fiber-reinforced region (2) and also the glass fibers of the glass-fiber-reinforced region (3) are directed or undirected, wherein the regions (2, 3) are preferably provided at least in part as semifinished products which are shaped in particular into a three-dimensional shape.

3. Vehicle structural element (1) according to Claim 1 or 2, **characterized in that** the carbon fibers and/or the glass fibers are present as woven fabrics, mats, laid screens, knitted or crocheted fabrics and/or a combination of these structures.

4. Vehicle structural element (1) according to one of the preceding claims, **characterized in that** the carbon-fiber-reinforced region (2) is arranged in a region of the vehicle structural element which is subjected to higher mechanical loading than the region of the vehicle structural element which is reinforced with glass fibers.

5. Method for producing a vehicle structural element (1) made of plastic based on a direct long fiber thermoplastic (D-LFT) pressing method, **characterized in that** the pre-heated carbon-fiber-reinforced region (2) and the pre-heated glass-fiber-reinforced region (3) are placed in a press and shaped, and then the finished vehicle structural element (1) is removed, **characterized in that** the vehicle structural element (1) is a cushion shell of a seat part, wherein at least the carbon-fiber-reinforced region (2) extends onto a region of a thigh rest of the cushion shell of the seat part, wherein the carbon-fiber-reinforced region (2) and the glass-fiber-reinforced region (3) adjoin one another directly.

## Revendications

1. Elément structurel (1) pour véhicule, en matière synthétique, présentant au moins une partie (2) renforcée de fibres de carbone et au moins une partie (3) renforcée de fibres de verre,
**caractérisé en ce que**
la partie (2) renforcée de fibres de carbone et la partie (3) renforcée de fibres de verre sont directement jointives l'une à l'autre,
**en ce que** l'élément structurel (1) pour véhicule est une coquille d'assise de pièce de siège et
**en ce qu'**au moins la partie (2) renforcée de fibres de carbone s'étend sur une partie d'un appui latéral de la coquille d'assise de la pièce de siège.

2. Elément structurel (1) pour véhicule selon la revendication 1, **caractérisé en ce que** les fibres de carbone de la partie (2) renforcée de fibres de carbone ainsi que les fibres de verre de la partie (3) renforcée de fibres de verre sont orientées ou non orientées, les parties (2, 3) étant prévues de préférence au moins en partie comme ébauches façonnées en particulier en une forme tridimensionnelle.

3. Elément structurel (1) pour véhicule selon les revendications 1 ou 2, **caractérisé en ce que** les fibres de carbone et/ou les fibres de verre présentent la forme de tissu, de feutre, de nappe, de tricot, de treillis et/ou d'une combinaison de ces structures.

4. Elément structurel (1) pour véhicule selon l'une des revendications précédentes, **caractérisé en ce que** la partie (2) renforcée de fibres de carbone est disposée dans une partie de l'élément structurel pour véhicule qui est sollicitée mécaniquement davantage que la partie de l'élément structurel pour véhicule qui est renforcée de fibres de verre.

5. Procédé de fabrication d'un élément structurel (1) pour véhicule, en matière synthétique, sur la base d'un procédé de compression directe de longues fibres thermoplastiques ("direct-long fibre thermoplastic" - D-LFT), **caractérisé en ce que** la partie (2) renforcée de fibres de carbone et préchauffée et la partie (3) renforcée de fibres de verre et préchauffée sont placées dans une presse et façonnées, l'élément structurel (1) pour véhicule terminé étant ensuite enlevé,
**caractérisé en ce que**
l'élément structurel (1) pour véhicule est une coquille d'assise de pièce de siège,
**en ce qu'**au moins la partie (2) renforcée de fibres de carbone s'étend sur une partie d'un appui latéral de la coquille d'assise de la pièce de siège et
**en ce que** la partie (2) renforcée de fibres de carbone et la partie (3) renforcée de fibres de verre sont directement jointives l'une à l'autre.
